# EUROPEAN PATENT APPLICATION

(11) **EP 4 553 057 A1**
(43) Date of publication of application: **14.05.2025**
(21) Application number: 24153417.1
(22) Date of filing: 23.01.2024
(51) Int. Cl.: C04B 35/443, C04B 35/626, C04B 35/657

(54) **REFRACTORY CHROME-FREE SPINEL MATERIAL BASED ON MG-CU-FE-AL-O SYSTEM AND METHOD OF PRODUCING REFRACTORY CHROME-FREE SPINEL MATERIAL**

(30) Priority: 07.11.2023 PL 44666623
(71) Applicant: Akademia Gorniczo-Hutnicza im. Stanislawa Staszica w Krakowie, 30-059 Krakow (PL)
(72) Inventor: Jastrzebska, Ilona, 31-702 Krakow (PL)
(74) Representative: Pietruszynska, Elzbieta

(57) **Abstract**

The subject of the invention is it comprises a compact microstructure containing a multicomponent high refractory chrome-free spinel phase synthesized by arc plasma melting, the composition of which spinel phase is given by the formula Mg_{0.5}Fe_{0.25}Cu_{0.25}Al_{4.0}O₄, containing 0.5 molar parts of Mg, 0.25 molar parts of Fe, 0.25 molar parts of Cu and 4.0 molar parts of Al, and it is monophasic material containing a complex multicomponent chrome-free spinel phase from the Mg-Cu-Fe-Al-O system having a pycnometric density ranging from 3.9643 to 4.0580 g/cm³, and present invention also comprises a method of producing this refractory chrome-free spinel material.

## Description

### Field of the invention

The subject of the invention relates to a refractory chrome-free spinel material based on Mg-Cu-Fe-Al-O system and a method for producing refractory chrome-free spinel material. The present invention may be used as a refractory material, a refractory aggregate or a semi-product intended for the production of refractory materials for metallurgical industry, in particular for copper and lead metallurgy.

### Background

Refractory materials used in copper metallurgy equipment are subjected to difficult conditions, including high temperatures up to 1400°C, thermal shocks due to periodic operation of the equipment (especially converters) and aggressive effects of chemical agents, including the most harmful slag. Such conditions can only be met by selected refractory materials that are characterized by the presence of high-melting components in their phase composition and an appropriate microstructure, with a special focus on high compactnes.

Many solutions currently used materials based on MgO and spinel solid solution. Semi-products, materials containing spinel phase are characterized by high refractoriness due to the high melting temperature of spinels above 1500°C, and high resistance to thermal shocks due to the low thermal expansion coefficients of the spinel phase. Typical examples of spinels used in industry are MgAl₂O₄ spinel and solid solution of (Mg,Fe)(Cr,Fe,Al)₂O₄ chromite spinel with melting point above 2000°C. The former spinel in combination with MgO provides the so-called direct bonding in the material.

Hence, microstructure of the material and its physical characteristics and phase composition play a key role in providing a chemical resistance of the material in a copper refining device.

### State of the art description

Currently, copper-lead metallurgy refining furnaces use magnesia-chromite materials containing up to approx. 35% Cr2O₃ in their chemical composition.

Chromium oxide and iron oxide dissolve in MgO at high temperatures, and during cooling, secondary spinel is precipitated, which occurs at the grain boundaries between magnesia and primary spinel and in the form of inclusions inside MgO grains. The so-called "direct" method of bonding the main components of the refractory material provides very good resistance to penetration by liquid slag/metal up to approximately 1700°C. Additionally, as a result of the difference in thermal expansion coefficients, microcracks are formed at the spinel inclusions/MgO interface, which makes the material more flexible and increases resistance of the material to thermal shocks. All these features make Cr₂O₃-containing materials working well in metallurgical conditions.

However, these materials have an unfavorable feature, which is the presence of toxic chromium (III) oxide in their chemical composition. Additionally, in the operating conditions of copper/lead refining furnaces, under the influence of oxygen, which is present in the fed reaction gas, and alkali or alkaline earth metal oxides (added for refining purposes), oxidation of the chromium (III) oxide contained in the materials occurs and the formation of chromium (VI) compounds, which belong to carcinogen group 1. The presence of these compounds in used refractory linings and copper slags generates a risk of groundwater contamination, and the presence of sols rich in chromium in the vicinity of refining equipment may generate a risk for the environment and employees. Chromium (VI) compounds cause dermatological diseases and respiratory system dysfunctions. For this reason, chromium oxide should be eliminated from use in the production of refractory materials. Some industrial sectors have already completely eliminated them, an example of which is the cement industry, where magnesium-spinel refractory material (MgO-MgAl₂O₄) is used as a replacement material.

Moreover, apart from the presence of the so-called direct bonds, the chemical composition plays a key role, as it must ensure the corrosion resistance of the material. In particular, the presence of oxidized copper has an adverse effect on the refractory lining because it has very low fluidity and wets the surface of the refractory material, which intensifies corrosion processes.

Chromium ions in chromite spinel ensure the formation of secondary spinel, which crystallizes during cooling from the liquid phase. The chromium phase has very high corrosion resistance.

Magnesia-chromite (or corundum-chromite) materials are produced on the basis of MgO and spinel with a complex chemical composition that can be described by the formula (Mg,Fe)(Cr,Fe,Al)₂O₄. Chromium-bearing semi-products for the production of materials are chromite ores, clinkers or magnesia-chromite coclinkers (source of complex spinel). The characteristics of the fundamental semi-products used in the production of basic refractories for metallurgy are presented below.

In the work by I. Jastrz 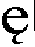 bska, J. St 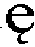 pień and J. Zukrowski entitled "Stabilization of hercynite structure at elevated temperatures by Mg substitution", Materials&Design, doi: 10.1016/j.matdes.2023.112449 presents the stabilization of spinels from the series Fe₁₋ₓ Mg, Al₂O₄ (x=0, 0.3, 0.5, 0.7) , and in particular with the composition Fe_{0.7}Mg_{0.3}Al₂O₄. The sample was obtained by arc plasma melting using a current of 140A from a dry homogenized powder mixture. However, the method of preparation and the composition of the material did not ensure a compact microstructure, as illustrated by the attached microstructural photos showing numerous intergranular pores. Such material will be characterized by increased penetration of aggressive slag, which is unfavorable from the point of view of the corrosion resistance of the material. The work also shows that spinel with a composition for x = 0, i.e. FeAl₂O₄, is characterized by low suitability for applications in refractory materials because it undergoes thermal decomposition after heating to 1200°C in an air atmosphere. The addition of Mg²⁺ ions to this spinel increases its high-temperature stability, but isothermal oxidation studies show a significant structure breakdown after heating at 1200°C in the air atmosphere. Microstructural images also confirm the surface oxidation reaction. The research presented in this work shows that compounds with spinel structure have a very specific nature, the properties of which strictly depend on the chemical composition and method of preparation.

In the paper of M.A. Serra, A.G.M. Othman, L.G. Girgis and R. Telle entitled "Assessment of Coclinkered Shaped Magnesite-Chromite Refractories Processed from Egyptian Materials", American Ceramic Society Bulletin, Vol. 86, No. 2, pp. 9102-9106, presents the properties of fundamental semi-products for the production of basic materials, including two magnesia-chromite clinkers (MC, 30% chromite ore) and two chromite-magnesia clinkers (CM, 70% chromite ore), obtained by firing of magnesium-bearing raw material (from seawater or natural magnesite) and chromite ore in various proportions. The chromite ore was characterized by the following chemical composition: Cr₂O₃ 46.32%, MgO 19.87%, Al₂O₃ 14.53%, Fe₂O₃ 12.40%, SiO₂ 4.36%, CaO 0,42%, and the magnesium-bearing raw material from seawater had more than 62.64% MgO, and natural magnesite had more than 46.79% MgO. Four types of refractory semi-products were produced. MC and CM clinkers were characterized by an average MgO content of 51/14% and an average total content of spinel solution of 43/78%, respectively. The total content of the silicate phases of monticellite CaO·MgO·SiO₂ and forsterite 2MgO·SiO₂ in both types of clinkers was below 10%. The microstructures of both types of clinkers had direct MgO-spinel bonding, but silicate phases were also present at the boundaries, significantly reducing the thermal properties of the semi-products. The MC aggregate had an average apparent density of 2.96 g/cm^{3 ,}and the CM aggregate had an average apparent density of 3.01 g/cm³. The open porosity was 18.4% and 16.8% for the MC and CM aggregates, respectively. The compactness results show that a material with low compactness was obtained, which is unfavorable in terms of corrosion resistance and penetration of liquid slag.

In the paper of Q. Zhao, C. Liu, D. Yang, P. Shi, M. Jiang, B. Li, H. Saxen, R. Zevenhoven entitled "A cleaner method for preparation of chromium oxide from chromite" Process Safety and Environmental Protection doi: 10.1016/j.psep.2016.09.017, presents a method of obtaining a spinel semi-product with a dense microstructure by extraction from chromite ore containing spinel in its phase composition (Mg,Fe)(Cr,Al,Fe)₂O₄ and enstatite contamination with MgSiO₃, using an extractant from the processing of ores rich in chromium (VI) compounds. After 60 minutes of leaching, material with a high spinel (Mg,Fe)(Cr,Al,Fe)₂O₄ content and a compact microstructure was obtained, but no other material parameters were given. The material was created at an intermediate stage of leaching chromite ore.

Patent publication CN108129136A presents a magnesia-forsterite material with the addition of carbon intended for copper converters. The material is obtained by sintering. The presence of aluminum titanate in the material causes the absorption of FeO from copper slag, which increases a share of SiO₂ in the slag, thus increasing a viscosity of the slag and its ability to penetrate into the refractory material. It is stated that the porosity of the material is 7-13%, the resistance to thermal shocks at 1100°C is 5 cycles, and the erosion resistance to copper matte is equal to 10,000-12,000 hours. The microstructure of the material is not presented.

Patent publication EP0653390A1 presents a method for obtaining a semi-product and a material based on phase components MgO and MgAl₂O₄ spinel for cement industry. The semi-product is manufactured on the basis of sintered or melted spinel aggregate containing minimum 27% MgO and fused magnesia aggregate with content of minimum 85% MgO. The semi-product produced by sintering was characterized by an average MgO content of 80% and Al₂O₃ of 17%. The material produced on the basis of the semi-product was characterized by an average open porosity of 18% and an apparent density of 3.55 g/cm³. The physical properties of the semi-material are not presented. A possible addition of Al₂O₃ powder was suggested, which will create a spinel in-situ, which may result in thickening the microstructure of the semi-product and the material. The microstructure of the semi-product and the material is not presented.

Patent publication CN113061045B presents a method of obtaining a material containing oxides of magnesium, iron, zinc and aluminum. The raw materials for the production of the material are two types of magnesia, including one with high purity and the other containing an increased content of iron oxide, spinel and nanometric zinc oxide. The material was produced by firing up to 1550-1650°C. During firing, nano-ZnO reacts with MgO and Al₂O₃ to form spinel and ZnO-MgO solid solution. The produced material has a phase composition characterized by the presence of high-melting phases, i.e. MgO, 2 types of spinels MgO·Al₂O₃ and ZnO·Al₂O₃ and a solid solution of (Zn,Mg)O. High chemical resistance of the produced material was found, provided by the high-melting spinel matrix. However, physical characteristics and microstructure of the material were not presented.

Patent publication CN103896613A presents a method of obtaining a magnesia-corundum material based on magnesia with an increased content of iron oxide. The initial chemical composition of the mixture included 80% magnesia with increased iron content and 1-20% corundum. The advantage of the invention is the production of a material with high strength parameters using low-purity raw materials, creating a spinel material in the matrix with a high melting point and capable of creating a protective layer. The material has an open porosity of 14% and an apparent density of 3.11 g/cm³. High erosion and corrosion resistance of the material was found, although the test results were not presented. The microstructure of the material is not presented.

Therefore, the purpose of the present invention is to develop, a method for obtaining a semi-product, which constitutes a refractory material, intended for the production of refractory materials for lining thermal devices in the metallurgical industry, in particular the copper industry.

Moreover, the aim of the invention is a new refractory material that does not have toxic chromium in its chemical composition and is characterized by high refractoriness, resistance to temperature shocks, and chemical resistance provided by the chemical composition of the material distinguished by the presence of built-in ions that are components of aggressive copper slags, which lowers the chemical potential of these components in the slag and reduces their penetration into the refractory, and therefore increases the chemical resistance of the refractory. The developed material can be used directly as a compact high refractory material or a semi-product for the production of alternative chrome-free refractory materials for the copper industry, as well as other industrial sectors such as lead and zinc production, steel, cement and glass industries.

### Disclosure of the invention

The subject of the present invention is the development of a new solution involving a high refractory chrome-free spinel material based on the Mg-Cu-Fe-Al-O system, characterized in that it comprises a compact microstructure containing a multicomponent, high refractory chrome-free spinel phase, synthesized by using an arc plasma melting method, the composition of the spinel phase is given by the formula Mg_{0.5}Fe_{0.25}Cu_{0.25}Al_{4.0}O₄, containing 0.5 molar parts of Mg, 0.25 molar parts of Fe, 0.25 molar parts of Cu and 4.0 molar parts of Al, wherein this monophase material containing a complex multicomponent chrome-free spinel phase (Mg,Cu)(Fe,Al)₂O₄ has a pycnometric density ranging from 3.9643 to 4.0580 g/cm³.

The invention also includes a method for producing high refractory chrome-free spinel material based on the Mg-Cu-Fe-Al-O system, characterized in that it is obtained as follows:
- the starting raw materials comprising MgO oxide, Al₂O₃ oxide, Fe₂O₃ oxide, and Cu₂O oxide are combined by weighing out in the appropriate proportion, in amounts that ensure the composition described by the sum formula Mg_{0.5}Fe_{0.25}Cu_{0.25}Al_{4.0}O₄, in order to obtain a mixture containing 0.5 molar parts of Mg, 0.25 molar parts of Fe, 0.25 molar parts of Cu, and 4.0 molar parts of Al, after which
- the obtained mixture is ground in a ball mill, where the grinding is carried out wet or dry for at least 1 hour, then
- the mixture is homogenized and ground into a powder with a grain size of less than 70 micrometers, and the mixture, mixed in appropriate proportions, is dried for at least 12 hours at a temperature of at least 100°C, and then
- briquettes are formed from the obtained mixture, and the edges of the mold are each time lubricated with a lubricant in the form of a solution of stearic acid or zinc stearate, then
- briquettes are melted using an arc plasma, with samples melted at least once on one side or twice on each side of the briquette, the first melting is carried out using a direct current of 100-200A, producing the title high refractory chrome-free spinel material.

Preferably, in the method according to the invention, the given raw materials are mixed in proportion to obtain a mixture with the composition from the series (Mg_{1-x-y},Feₓ,Cu_{y} )Al_{z}O₄ where x=0.25, y=0.25, z=2.5 i.e. Mg_{0.5}Fe_{0.25}Cu_{0.25}Al_{2.5}O₄; x=0.25, y=0.25, z=3.0, i.e. Mg_{0.5}Fe_{0.25}Cu_{0.25}Al_{3.0}O₄, x=0.25, y=0.25, z=3.5, i.e. Mg_{0.5}Fe_{0.25}Cu_{0.25}Al_{3.5}O₄, and x=0.25, y=0.25, z=4.0, i.e. Mg_{0.5}Fe_{0.25}Cu_{0.25}Al_{4.0}O₄.

Preferably, in the method according to the invention, the spinel composition (Mg_{1-x-y},Feₓ,Cu_{y})Al_{z}O₄ contains Mg, Ni or Zn instead of Fe; instead of Cu there is Ni or Zn; instead of Mg there is Fe, Ni or Zn.

Preferably, in the method according to the invention, the given raw materials are mixed in proportion to obtain a mixture with the composition from the series (Mg₁₋ₓ,Feₓ )Al_{z}O₄ where x = 0.25 to 0.75 and z = 2.5 to 4.0.

Preferably, in the method according to the invention, the mixture material is dried for 12-24 hours at a temperature of 105-110°C.

Preferably, in the method according to the invention, it is ground in a ball mill for 2-5 hours, most preferably 2 hours.

Preferably, in the process according to the invention, during grinding the mixture is used where the ratio of ground material:balls:anhydrous or aqueous solvent is 1:1:1.

Preferably, in the process according to the invention, solvents selected from methanol, ethanol, acetone, isopropanol, dimethylsulfoxide, tetrahydrofuran, N,N-dimethylformamide and toluene are used as an anhydrous solvent, preferably isopropanol is used.

Preferably, in the method according to the invention, argon (Ar), nitrogen (N₂) or a mixture of N₂+Ar is used for melting.

Preferably, in the method according to the invention, argon with a minimum purity of 99.999% is used for melting.

Preferably, in the method according to the invention, the obtained high refractory chrome-free spinel material is subjected to additional heat treatment in a protective atmosphere of Ar or another non-reactive oxygen-free atmosphere for at least 1 hour, preferably in an atmosphere of nitrogen (N₂) or a mixture of N₂ +Ar.

The material is characterized by a favorable, compact microstructure, containing a multicomponent, high refractory spinel phase without chromium, with high corrosion resistance to copper slag and resistance to thermal shocks, thanks to which it can be used for the production of refractory linings in copper metallurgy.

High corrosion resistance is ensured by the chemical composition of the material characterized by the presence of built-in copper ions which are components of aggressive copper slags, which lowers the chemical potential of these components in the slag and reduces their penetration into the refractory material, and therefore increases the chemical resistance of the refractory material.

### Brief description of the drawings

The subject of the invention is shown in the examples of embodiment, with reference to the attached drawings, in which:
- **FIG. 1**: Microstructure of magnesia-chromite coclinker with direct bonding of chromium spinel and magnesia grains, in the form of photographs a and b (state of the art), commonly used for the production of refractory materials for the copper industry and other industrial sectors.
- **FIG. 2**: Microstructure of a chrome-free spinel material based on the Mg-Cu-Fe-Al-O system according to the invention, with a molar fraction of aluminum atoms of 4.0.
- **FIG. 3**: Diffraction pattern of a chromium-free spinel material based on the Mg-Cu-Fe-Al-O system, with a molar fraction of aluminum atoms of 4.0 (quantitative composition determined by the Rietveld method: 99.5%, spinel, 0.5% Cu).

### Detailed description of the invention

The subject matter of the present invention is described in detail below with reference to the accompanying Figures and embodiments. The present invention is not limited to the detailed embodiments described herein.

### Reference example

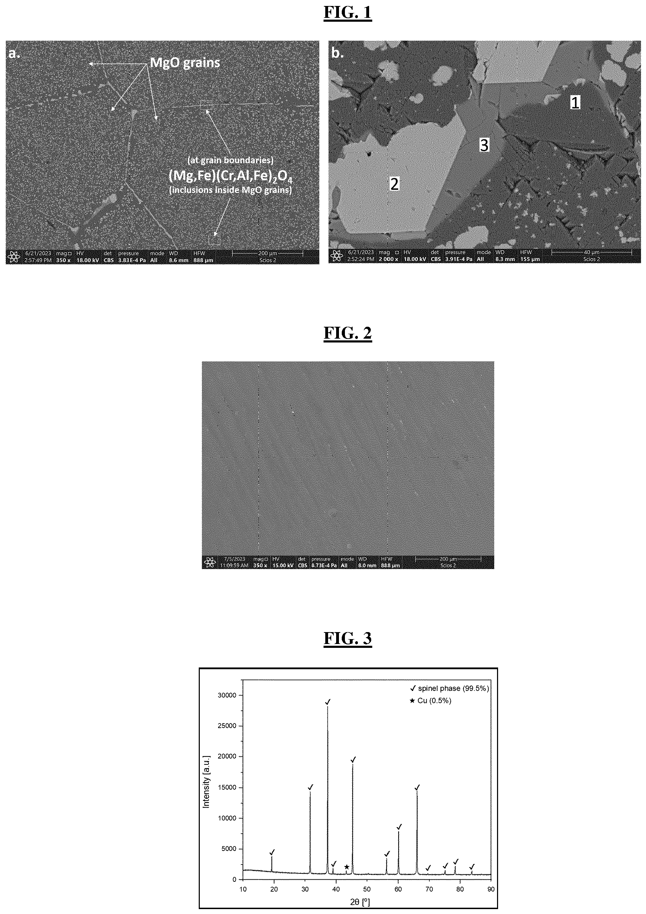

Reference material: magnesia-chromite coclinker, obtained by co-melting of magnesia (source of MgO) and chromite ore concentrate (source of chrome spinel (Mg,Fe)(Cr,Al,Fe)₂O₄), is an aggregate based on the system MgO-Al₂O₃-Fe₂O₃-Cr₂O₃. It is semi-product widely used in the production of refractory materials used to line most of refining heating devices in the world in copper and lead metallurgy. It is also used in materials for other industrial sectors, including e.g. for steel industry (mostly in devices for vacuum degassing of steel). Coclinker is characterized by an actual density equalled to 4.1144 g/cm ³ (with a standard deviation of 0.0132 g/cm³) tested by the helium pycnometry method. Its microstructure is shown in FIG. 1. The microstructure is characterized by the presence of favorable direct MgO-chromium spinel bonding and a chromium spinel inclusion inside the MgO grains. The spinel phase has a complex composition, which can be expressed by the formula (Mg,Fe)(Cr,Al,Fe)₂O₄. The microstructure also contains the secondary phase of monticellite CaMgSiO₄ (unfavorable phase, polluting the microstructure), which often reduces the resistance properties of the material. Table 1 showed the chemical composition in the microareas of the magnesia-chromite coclinker (see, FIG. 1).

**Table. 1. EDS chemical analysis (X-ray energy dispersive spectroscopy method) in the microareas marked in photograph b, points 1, 2 and 3 in FIG.1.**

| Point | Chemical composition by EDS [at. %]* | | | | | | Phase component |
|---|---|---|---|---|---|---|---|
| | Mg | Cr | Al | Fe | Si | Ca | |
| 1 | 40.0 | 0.4 | - | 1.8 | - | - | MgO |
| 2 | 11.1 | 17.4 | 5.2 | 0.6 | - | - | (Mg,Fe)(Cr,Al,Fe)₂O₄ |
| 3 | 11.6 | - | 0.1 | 0.5 | 10.8 | 12.4 | CaO·MgO·SiO₂ |

| | | | | | | | |
|---|---|---|---|---|---|---|---|
| *the rest up to 100% is oxygen. | | | | | | | |

According to the present invention, the refractory material with a complex chemical composition is based on the formula of MgO-Al₂O₃-Fe₂O₃-CuOₓ, therefore it does not contain toxic chromium in its chemical composition.

### Example 1:

To prepare a compact high refractory material based on the system of MgO-Al₂O₃-Fe₂O₃-CuOₓ, MgO oxide with a purity of 98.0% (ignition loss -2.5347 g), Al₂O₃ oxide with a purity of 99.7% (ignition loss -0.2683 g), Fe₂O₃ with a purity of 97.2% (ignition loss -2.668 g) and Cu₂O oxide with a purity of 97.0% (ignition increment +9.9163 g) were used. The components are weighed in quantities ensuring a composition described by the formula Mg_{0.5}Fe_{0.25}Cu_{0.25}Al_{2.5}O₄ , i.e. oxides are combined (taking into account their purity) to obtain a mixture containing 0.5 molar parts of Mg, 0.25 molar parts of Fe, 0.25 molar parts of Cu and 2.5 molar parts of Al. The spinel then contains a 0.5 molar excess of trivalent ions in relation to a typical normal spinel, in which trivalent ions constitute 2 molar parts (normal spinel can be described by the general formula AB₂O₄, where A are divalent ions in tetrahedral positions, and B are trivalent ions in octahedral positions), which has a beneficial effect on the binding of the remaining divalent ions in the spinel structure.

After weighing, the mixture is ground in a ball mill. Wet grinding is carried out for 1 hour, with the ratio of ground material:balls:isopropanol being 1:1:1. Dry mixing is also acceptable. In the process according to the invention, anhydrous solvents selected from methanol, ethanol, acetone, isopropanol, dimethylsulfoxide, tetrahydrofuran, N,N-dimethylformamide and toluene can be used as a solvent, preferably isopropanol or aqueous solvents are used. The mixture is homogenized and ground into a powder with a grain size of less than 70 micrometers. Mixed in appropriate proportions, the mixture is dried for 24 hours at a temperature of 110°C. Then, the mixtures are formed into briquettes at a pressure of 100 MPa without any forming additives, with the height of the briquettes being half of their diameter. The edges of the mold are each time lubricated with a lubricant in the form of a solution of stearic acid or zinc stearate. Then the briquettes are melted using an argon arc plasma, using argon with a minimum purity of 99.999% Ar. The samples are melted twice, once on each side of the briquette. The first melting is carried out using a direct current of 170 A, while the second melting is carried out using a direct current of 165 A to 175 A, preferably 170 A. The material obtained in this way is characterized by the following properties:
- phase composition: 99.2% spinel phase and 0.8% Cu (determined by the X-ray diffractometry method),
- high hardness (determined by the Vickers method),
- pycnometric density: 4.0580 g/cm³ (determined by the helium pycnometry method),
- open porosity: 8.5 % (determined using the Archimedes immersion method),
- apparent density: 3.61 g/cm³ (determined using the Archimedes immersion method).

### Example 2:

To prepare a compact high refractory material based on the system of MgO-Al₂O₃-Fe₂O₃-CuOₓ with a purity of 98,0% (ignition loss -0.5347 g), Al₂O₃ with a purity of 99.7% (ignition loss -2.683 g), Fe₂O₃ with a purity of 97.2% (ignition loss -2.668 g) and Cu₂O oxide with a purity of 97.0% (igition increment +9.9163 g) were used. The components are weighed in quantities ensuring a composition described by the formula Mg_{0.5}Fe_{0.25}Cu_{0.25}Al_{4.0}O₄, i.e. oxides are combined (taking into account their purity) to obtain a mixture containing 0.5 molar parts of Mg, 0.25 molar parts of Fe, 0.25 molar parts of Cu and 4.0 molar parts of Al. The spinel then contains a 2.0 molar excess of trivalent ions in relation to a typical normal spinel, in which trivalent ions constitute 2 molar parts (normal spinel can be described by the general formula AB₂O₄ , where A are divalent ions in tetrahedral positions, and B are trivalent ions in octahedral positions), which has a beneficial effect on the binding of the remaining divalent ions in the spinel structure.

After weighing, the mixture is ground in a ball mill. Wet grinding is carried out for 1 hour, with the ratio of ground material:balls:isopropanol being 1:1:1. Dry mixing is also acceptable. In the process according to the invention, anhydrous solvents selected from methanol, ethanol, acetone, isopropanol, dimethylsulfoxide, tetrahydrofuran, N,N-dimethylformamide and toluene can be used as a solvent, preferably isopropanol or aqueous solvents are used. The mixture is homogenized and ground into a powder with a grain size of less than 70 micrometers. Mixed in appropriate proportions, the mixture is dried for 24 hours at a temperature of 110°C. Then, the mixtures are formed into briquettes at a pressure of 100 MPa without any forming additives, with the height of the briquettes being half of their diameter. The edges of the mold are each time lubricated with a lubricant in the form of a stearic acid solution. Then the briquettes are melted using an argon arc plasma, applying argon with a minimum purity of 99.999% Ar. The samples are melted twice, once on each side of the briquette. The first melting is carried out using a direct current of 170 A, while the second melting is carried out using a direct current of 165 A to 180 A. The material can be additionally heated in an oxygen-free protective atmosphere for a minimum of 1 hour. The material obtained in this way is characterized by the following properties:
- phase composition: 99.5% spinel phase and up to 0.5% Cu (determined by the X-ray diffractometry method), according to FIG. 3.
- high hardness (determined by the Vickers method),
- pycnometric density: 3.9643 g/cm³ (determined by the helium pycnometry method),
- open porosity: 7.1% (determined using the Archimedes immersion method),
- apparent density: 3.46 g/cm³ (determined using the Archimedes immersion method).
- the compact microstructure is shown in FIG. 2.

**Table. 2 Physical properties of chrome-free spinel materials according to the invention**

| Initial composition of the material | Pycnometric density [g/cm³ ] | Apparent density [g/cm³ ] | Open porosity [%] |
|---|---|---|---|
| Mg_{0.5}Fe_{0.25}Cu_{0.25}Al_{2.5}O₄ | 4.0580 | 3.61 | 8.5 |
| Mg_{0.5}Fe_{0.25}Cu_{0.25}Al_{3.0}O₄ | 4.0195 | 3.54 | 8.4 |
| Mg_{0,5}Fe_{0,25}Cu_{0,25}Al_{3,5}O₄ | 3,9918 | 3,47 | 7,7 |
| Mg_{0,5}Fe_{0,25}Cu_{0,25}Al_{4,0}O₄ | 3,9643 | 3,46 | 7,1 |

The resulting monophase material according to the invention containing a complex multicomponent chrome-free spinel from the Mg-Cu-Fe-Al-O system has a pycnometric density ranging from 3.9643 to 4.0580 g/cm³, is therefore similar in physical properties to a competing magnesia-chromite coclinker (as in the reference example) commonly used to produce magnesia-chromite materials used for thermal linings of refining furnaces in copper metallurgy. The solution developed according to the invention can also be used as a compact high refractory material or a semi-product for the production of alternative chrome-free refractory materials.

The high refractory chrome-free material according to the invention can also be used, after grinding and combining with other components, as a chrome-free refractory aggregate for the production of refractory materials for the metallurgical industry.

## Claims

1. High refractory chrome-free material with spinel based on the Mg-Cu-Fe-Al-O system, **characterized in that** it comprises a compact microstructure containing a multicomponent high refractory chrome-free spinel phase synthesized by arc plasma melting, the composition of which spinel phase is given by the formula Mg_{0.5}Fe_{0.25}Cu_{0.25}Al_{4.0}O₄, containing 0.5 molar parts of Mg, 0.25 molar parts of Fe, 0.25 molar parts of Cu and 4.0 molar parts of Al, and it is the monophasic material containing a complex multicomponent chrome-free spinel phase from the Mg-Cu-Fe-Al-O system having a pycnometric density ranging from 3.9643 to 4.0580 g/cm³.

2. A method for producing high refractory chrome-free spinel material based on the Mg-Cu-Fe-Al-O system, **characterized in that** it is obtained as follows:
- the starting raw materials comprising MgO oxide, Al₂O₃ oxide, Fe₂O₃ oxide, and Cu₂O oxide are combined by weighing out in the appropriate proportion, in amounts that ensure the composition described by the ormula Mg_{0.5}Fe_{0.25}Cu_{0.25}Al_{4.0}O₄, in order to obtain a mixture containing 0.5 molar parts of Mg, 0.25 molar parts of Fe, 0.25 molar parts of Cu, and 4.0 molar parts of Al, after which
- the obtained mixture is ground in a ball mill, where the grinding is carried out wet or dry for at least 1 hour, then
- the mixture is homogenized and ground into a powder with a grain size of less than 70 micrometers, and the mixture, mixed in appropriate proportions, is dried for at least 12 hours at a temperature of at least 100°C, and then
- briquettes are formed from the obtained mixture, and the edges of the mold are each time lubricated with a lubricant in the form of a solution of stearic acid or zinc stearate, then
- briquettes are melted using an arc plasma, with samples melted at least once on one side or twice on each side of the briquette, the first melting is carried out using a direct current of 100-200A, producing the title high refractory chrome-free spinel material.

3. The method according to claim 2, **characterized in that** the given raw materials are mixed in proportion to obtain a mixture with the composition with the formula (Mg_{1-x-y},Feₓ,Cu_{y})Al_{z}O₄ where x=0.25, y=0.25, z =2.5 i.e. Mg_{0.5}Fe_{0.25}Cu_{0.25}Al_{2.5}O₄; x=0.25, y=0.25, z=3.0, i.e. Mg_{0.5}Fe_{0.25}Cu_{0.25}Al_{3.0}O₄, x=0.25, y=0.25, z=3.5, i.e. Mg_{0.5}Fe_{0.25}Cu_{0.25}Al_{3.5}O₄, and x=0.25, y=0.25, z=4.0, i.e. Mg_{0.5}Fe_{0.25}Cu_{0.25}Al_{4.0}O₄.

4. The method according to claim 2 or claim 3, **characterized in that** the spinel composition (Mg_{1-x-y},Feₓ,Cu_{y})Al_{z}O₄ contains Mg, Ni or Zn instead of Fe; instead of Cu there is Ni or Zn; instead of Mg there is Fe, Ni or Zn.

5. The method according to claim 2 or claim 3, **characterized in that** the given raw materials are mixed in proportion to obtain a mixture with the composition from the formula (Mg₁₋ₓ,Feₓ)Al_{z}O₄ where x = 0.25 to 0.75 and z = 2.5 to 4.0.

6. The method according to claim 2-5, **characterized in that** the material is dried for 12-24 hours at a temperature of 105-110°C.

7. The method according to claim 2-6, **characterized in that** it is ground in a ball mill for 2-5 hours, most preferably 2 hours.

8. The method according to claim 2-7, **characterized in that** during grinding a mixture is used wherein the ratio of ground material:balls:anhydrous or aqueous solvent is 1:1:1.

9. The method according to claim 8, **characterized in that** solvents selected from methanol, ethanol, acetone, isopropanol, dimethylsulfoxide, tetrahydrofuran, N,N-dimethylformamide and toluene are used as an anhydrous solvent, preferably isopropanol is used.

10. The method according to claim 2-9, **characterized in that** argon (Ar), nitrogen (N₂) or a mixture of N₂ +Ar is used for melting.

11. The method according to claim 2 - 10, **characterized in that** argon with a minimum purity of 99.999% is used for melting.

12. The method according to claim 2 - 11, **characterized in that** the obtained high refractory chrome-free spinel material is subjected to additional heat treatment in a protective atmosphere of Ar or another non-reactive oxygen-free atmosphere, for at least 1 hour, preferably in an atmosphere of nitrogen (N₂) or a mixture of N₂ +Ar.
